# EUROPEAN PATENT APPLICATION

(11) **EP 4 718 825 A1**
(43) Date of publication of application: **01.04.2026**
(21) Application number: 24813832.3
(22) Date of filing: 19.03.2024
(51) Int. Cl.: H04L 69/22

(54) **DATA TRANSMISSION METHOD, COMMUNICATION APPARATUS, AND STORAGE MEDIUM**

(30) Priority: 29.05.2023 CN 202310622275
(71) Applicant: ZTE Corporation, Shenzhen, Guangdong 518057 (CN)
(72) Inventor: CHEN, Junjiang, Shenzhen, Guangdong 518057 (CN); LI, Jun, Shenzhen, Guangdong 518057 (CN); DING, Yuanxin, Shenzhen, Guangdong 518057 (CN); LIU, Zhilong, Shenzhen, Guangdong 518057 (CN); GUO, Chengfeng, Shenzhen, Guangdong 518057 (CN)
(74) Representative: Ziebig Hengelhaupt Intellectual Property Attorneys Patentanwaltskanzlei PartGmbB
(86) International application number: PCT/CN2024/082542
(87) International publication number: WO 2024/244626

(57) **Abstract**

Provided are a data transmission method, a communication apparatus, and a storage medium. The data transmission method comprises: determining a first transmission path between a first node and a second node, the first node being a source node of a first data packet, and the second node being a destination node of the first data packet; generating a second data packet according to the first data packet and the first transmission path, the second data packet comprising the first data packet and a protocol header used for indicating the first transmission path; and sending the second data packet.

## Description

The present disclosure claims a priority to Chinese Patent Application No. 202310622275.8, filed on May 29, 2023, the entire content of which is incorporated into the present application by reference.

### TECHNICAL FIELD

The present disclosure relates to the field of audio and video communication technologies, and in particular, to a data transmission method, a communication apparatus, and a storage medium.

### BACKGROUND

With the popularization of the mobile Internet and the commercialization of the 5th-generation mobile communication technology (5G), users' requirements for low-latency and high-reliability audio and video applications are growing increasingly. Currently, real-time audio and video communication (Real-Time Communication, RTC), with its long-term technical accumulation in the field of video services, quickly provides the industry with high concurrency, low delay, high-definition and smooth, safe and reliable full scene, fully interactive, and fully real-time audio and video services, which are applicable to various application scenarios such as online education, cloud conference, social entertainment, etc.

### SUMMARY

In an aspect, the embodiments of the present disclosure provide a data transmission method, applied to a first node. The data transmission method includes:
determining a first transmission path between the first node and a second node, where the first node is a source node of a first packet and the second node is a destination node of the first packet;
generating a second packet according to the first packet and the first transmission path, where the second packet includes the first packet and a protocol header for indicating the first transmission path; and
sending the second packet.

In another aspect, the embodiments of the present disclosure provide a data transmission method, applied to a third node. The data transmission method includes:
receiving a second packet, where the second packet includes a first packet and a protocol header for indicating a first transmission path, the first transmission path is a path between a first node and a second node, the first node is a source node of the first packet, and the second node is a destination node of the first packet;
parsing the second packet, to obtain the protocol header for indicating the first transmission path; and
sending a second service packet to a next node located after the third node in the first transmission path based on the protocol header for indicating the first transmission path.

In yet another aspect, the embodiments of the present disclosure provide a communication apparatus, applied to a first node. The communication apparatus includes: a processing module and a sending module;
the processing module, is configured to determine a first transmission path between the first node and a second node, where the first node is a source node of a first packet and the second node is a destination node of the first packet;
the processing module, is further configured to generate a second packet according to the first packet and the first transmission path, where the second packet includes the first packet and a protocol header for indicating the first transmission path; and
the sending module, is configured to send the second packet.

In yet another aspect, the embodiments of the present disclosure provide a communication apparatus, applied to a third node. The communication apparatus includes a transceiving module and a processing module;
the receiving module, is configured to receive a second packet, where the second packet includes a first packet and a protocol header for indicating a first transmission path, the first transmission path is a path between a first node and a second node, the first node is a source node of the first packet, and the second node is a destination node of the first packet;
a processing module, is configured to parse the second packet, to obtain the protocol header for indicating the first transmission path; and
the sending module, is configured to send the second service packet to a next node located after the third node in the first transmission path, based on the protocol header indicating the first transmission path.

In yet another aspect, the embodiments of the present disclosure provide a communication apparatus. The communication apparatus includes: a processor and a memory; the memory has stored instructions executable by the processor; the processor is configured to execute the instructions, so that the communication apparatus implements any one of the methods provided in the first aspect or the second aspect above.

In yet another aspect, the embodiments of the present disclosure provide a computer readable storage medium. The computer readable storage medium stores computer instructions, and the computer instructions, when executed on a computer, cause the computer to perform any one of the methods provided in the first aspect or the second aspect above.

In yet another aspect, the embodiments of the present disclosure provide a computer program product containing computer instructions. The computer instructions, when executed on a computer, cause the computer to perform any one of the methods provided in the first aspect or the second aspect above.

### BRIEF DESCRIPTION OF THE DRAWINGS

The drawings are used to provide a further understanding for the technical solutions of the present disclosure, constitute a part of the specification, are used to explain the technical solutions of the present disclosure in conjunction with the embodiments of the present disclosure, and do not constitute a limitation on the technical solutions of the present disclosure.
FIG. 1 is a schematic diagram of an architecture of an audio and video system according to some embodiments.
FIG. 2 is a flow chart of a data transmission method according to some embodiments.
FIG. 3 is a flow diagram of a path information transmission according to some embodiments.
FIG. 4 is a structural schematic diagram of a protocol header according to some embodiments.
FIG. 5 is a flow chart of another data transmission method according to some embodiments.
FIG. 6 is a flow diagram of a path handover according to some embodiments.
FIG. 7 is a flow chart of yet another data transmission method according to some embodiments.
FIG. 8 is a schematic diagram of a data transmission process according to some embodiments.
FIG. 9 is a schematic diagram of components of a data transmission apparatus according to some embodiments.
FIG. 10 is a schematic diagram of components of another data transmission apparatus according to some embodiments.
FIG. 11 is a structural schematic diagram of a data transmission apparatus according to some embodiments.

### DETAILED DESCRIPTION

The technical solutions in the embodiments of the present disclosure will be described clearly and completely below in conjunction with the drawings in the embodiments of the present disclosure. Obviously, the described embodiments are only a part of the embodiments of the present disclosure, not all of the embodiments. Based on the embodiments of the present disclosure, all other embodiments obtained by those ordinary skilled in the art without making inventive efforts fall within the scope of protection of the present disclosure.

In the description of the present disclosure, unless otherwise specified, the symbol "/" means "or", for example, "A/B" may mean A or B. Herein, "and/or" merely describes an association relationship of associated objects, and means that there are three kinds of relationships, and for example, A and/or B may mean: only A, only B, and both A and B. In addition, "at least one" means one or more, and the "more" or variants thereof means two or more. Expressions, such as "first" and "second", etc., do not limit the number and execution order, and the expressions, such as "first" and "second", etc., also do not necessarily limit different items.

It should be noted that in the present disclosure, the expressions such as "exemplary/exemplarily" or "for example" are used to present an example, illustration, or explanation. Any embodiment or design solution described with "exemplary/exemplarily" or "for example" in the present disclosure should not be construed as preferred or advantageous over other embodiments or design solutions. Rather, the usage of the words, such as "exemplary/exemplarily" or "for example", is intended to present relevant concepts in a detailed manner.

A real time network (Real Time Network, RTN) system may be divided into a control layer and a forwarding layer according to its architectural hierarchy and key technical points of the RTN are also concentrated in the control layer and the forwarding layer. As a core technology of the forwarding layer of the RTN, the data transmission aims to enable service data to be forwarded at high speed and high quality along an optimal path planned for the data transmission by the RTN system. However, there are still problems with RTN data transmission technology in some technologies. The transmission data type of the RTN system is single, and the data transmission is only applicable to audio and video data, and is not well-suited for private protocols or non-audio and video data.

In view of this, the embodiments of the present disclosure provide a data transmission method, applied to a first node and the method includes: first determining a first transmission path between the first node and a second node, where the first node is a source node of a first packet and the second node is a destination node of the first packet; then generating a second packet according to the first packet and the first transmission path, where the second packet includes the first packet and a protocol header for indicating the first transmission path; and sending the second packet.

Therefore, in the embodiments of the present disclosure, when service data is transmitted, an intermediate node may acquire path information based on the protocol header for indicating the first transmission path without decapsulating the entire first packet. Furthermore, the intermediate nodes may support data transmission of various data types without adapting to other data types.

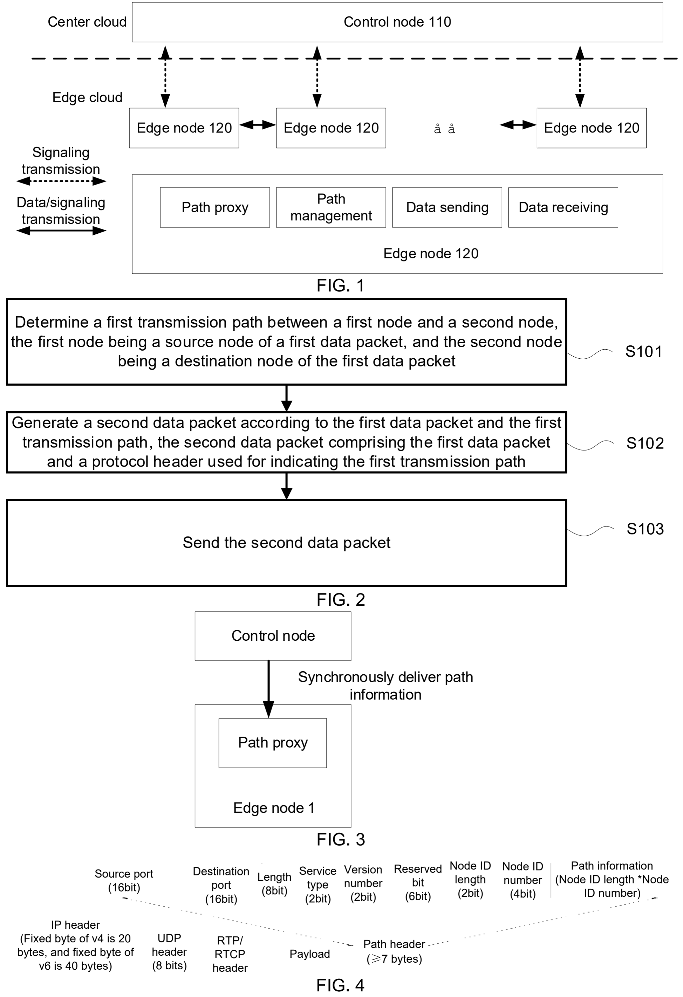

FIG. 1 shows an architecture of an audio and video system, provided in the embodiments of the present disclosure. As shown in FIG. 1, the audio and video system may include a control node 110 and edge nodes 120 and the edge nodes 120 are used to support access and forwarding of the audio and video data.

In some embodiments, the audio and video system may include an audio and video cloud network, and the audio and video cloud network may be used to implement distributed deployment of infrastructure resources for edge computing, and to perform unified management on these resources. A deployed point with more resources and a concentrated location is referred to as a center cloud, and a deployed point with fewer resources and widely distributed location is referred to as an edge cloud (also referred to as an edge cloud node), and since the edge cloud is more widely distributed, the edge cloud is closer to a terminal device used by a user, that is, the edge cloud may be interpreted as a cloud computing platform close to the terminal device, and the center cloud may be interpreted as a cloud platform that uniformly manages a plurality of edge clouds.

The control node 110 is deployed in the above-mentioned center cloud, is responsible for controlling and managing a medium node, and may receive and process node information and link quality information reported by the medium node. In some embodiments, the control node 110 may include a network sensing module and an access scheduling module. The network sensing module may collect edge data and configure network topology, and the access scheduling module may maintain the access quantized network topology corresponding to respective services and preferentially schedule the corresponding edge nodes. In addition, the control center 110 may also be used to calculate routing forwarding paths, plan optimal routing forwarding paths, intelligently forward data, and manage classified data, etc.

The edge node 120 is deployed in the above-mentioned edge cloud, and a data transmission path may be composed of a plurality of edge nodes 120 and links between the nodes. The edge node 120 may be composed of a plurality of small nodes and distributed over a wide range, and may be used to manage edge path tables, encapsulate and parse path protocols, and send and receive data. The edge node 120 is used to implement a path proxy function, a path management function, a data sending function, and a data receiving function and thus, the edge node 120 may further include a path proxy module, a path management module, a data sending module, and a data receiving module.

In some embodiments, the audio and video system may further include a client accessing the edge node 120. The client may be various physical devices or software applications (e.g., a mobile phone application program (Application, App), a software development kit (Software Development Kit, SDK) or a terminal device (e.g., a mobile phone, a tablet computer, a desktop computer, a laptop computer, a handheld computer, a notebook computer, an ultra-mobile personal computer (UMPC), a netbook, as well as a cellular phone, a personal digital assistant (PDA), an augmented reality (AR)/virtual reality (VR) device and other terminal devices)) that supports the generation, transmission, and display of audio and video data, etc.

It can be understood that, the architecture of the system shown in FIG. 1 does not constitute a limitation on the embodiments of the present disclosure, and it may include more or fewer components than those shown, or a combination of certain components, or a different arrangement of components.

Methods provided in the present disclosure will be introduced in detail below in conjunction with the drawings of the specification.

As shown in FIG. 2, the embodiments of the present disclosure provide a data transmission method, applied to a first node and the method at least includes S101 to S103.

In S101, a first transmission path between the first node and a second node is determined, where the first node is a source node of a first packet and the second node is a destination node of the first packet.

Taking an example in which the first node is the source node and the second node is the target node, the above first transmission path is a path used to transmit the first packet. Exemplarily, the first node and the second node may be two edge nodes in the audio and video system shown in FIG. 1.

In some embodiments, the first node may perform searching based on a pre-stored path table, to determine the first transmission path. The path table is used to record a path with the first node as the source node in the audio and video system.

In some embodiments, the path table may be stored using a data structure of a hash table, where the key of the hash table stores an identifier of the destination node, such as an ID, which is an integer type, and a value of the hash table stores path information from the edge node (the first node) to the target node, which is a string type. Therefore, the first node may quickly retrieve corresponding path information based on the path table. Exemplarily, the information stored in the path table may be <2, "1-2">, <3, "1-3">, <4, "1-3-4">, <5, "1-2-5">, <6, "1-3-6">, to represent path 1-2, path 1-3, path 1-3-4, path 1-2-5, and path 1-3-6. 1, 2, 3, 4, 5, and 6 are identifiers of edge node 1, edge node 2, edge node 3, edge node 4, edge node 5, and edge node 6, respectively.

In some embodiments, the first node may include a path proxy module and a path management module, and the path table may be stored in the path proxy module. Therefore, the path management module may search the path table in the path proxy module based on the destination node of the first packet (i.e., the above second node), to obtain the first transmission path.

Exemplarily, if the source node of the first packet is the edge node 1 and the destination node is the edge node 5, the path management module of the edge node 1 may search the path proxy module, the path proxy module may retrieve "value=1-2-5" according to "key=5" and then, the path information at this time is "1-2-5", that is, the path composed of path 1-2-5.

In some embodiments, the control node of the audio and video system may calculate the optimal path between any nodes of the audio and video system in real time at a preset frequency, and synchronously deliver the path information that is calculated to respective edge nodes.

It should be noted that, a time granularity at which the control node synchronously delivers the path table may be consistent with a time granularity at which the edge data is collected. Exemplarily, if the control node collects data from the edge node every 5 seconds (that is, the above preset frequency), after collecting the data and calculating the path, the control node may deliver the path table information, so that the frequency of synchronous delivering may also be once every 5 seconds.

In an example, the control node may group the path information based on the source nodes of the paths, and divide paths with a same source node into a same group. Furthermore, respective groups of path information may be sent to the source node of the group of path information. Exemplarily, as shown in FIG. 3, if the source nodes of the paths included in a group of path information are all edge nodes 1, the control node may send the group of path information to the edge nodes 1. Furthermore, the path proxy module of the edge node 1 may receive and store the group of path information.

Exemplarily, if the path information determined by the control node includes path 1-3-2, path 1-3, path 1-3-4, path 1-3-5, path 1-3-4-6, path 2-3-1, path 2-3, path 2-4, path 2-3-5, and path 2-4-6. 1, 2, 3, 4, 5, and 6 are identifiers of edge node 1, edge node 2, edge node 3, edge node 4, edge node 5, and edge node 6, respectively.

The control node may synchronously send the path information of path 1-2, path 1-3, path 1-3-4, path 1-2-5, and path 1-3-6 to edge node 1. Furthermore, the control node may synchronously send the path information of path 2-3-1, path 2-3, path 2-4, path 2-3-5, and path 2-4-6 to the edge node 2.

In some embodiments, before performing searching based on a pre-stored path table, the first node may further receive first path information sent from the control node, and generate a path table according to the first path information.

The first path information is used to indicate the control node to determine a path with the first node as the source node, based on collected edge node data. Exemplarily, the first node may use a data structure of a hash table to store the path information.

It should be noted that, when a service transmits data through the RTN system, it usually needs to first acquire a path from the control node, the control node receives stress from various service flows from various edge nodes, resulting in relatively high stress. In the embodiments of the present disclosure, the edge node may acquire the path information calculated and delivered by the central node in real time and generate a path table. Therefore, when transmitting data, the edge node does not need to acquire path information from the control center, but may directly acquire the path information from the path table of the edge node, which may reduce the stress on the control layer.

In S102, a second packet according to the first packet and the first transmission path is generated, where the second packet includes the first packet and a protocol header for indicating the first transmission path.

In some embodiments, the protocol header for indicating the first transmission path is located in an outer layer of a header of the second packet.

It should be noted that, the protocol header is encapsulated at the outer layer of the packet header. Therefore, when transmitting the packet, an intermediate node does not need to decapsulate the entire packet (that is, the path information may be acquired at the outer layer of the packet header). Furthermore, the intermediate node does not need to consider adaptation problems of other data types (i.e., the data transmission of various data types may be supported).

In some embodiments, the protocol header for indicating the first transmission path includes a source port field, a destination port field, and a path information field, and the path information field is used to indicate a node included in the first transmission path.

In some embodiments, the protocol header for indicating the first transmission path further includes at least one of: a length field of the protocol header, a length field of a node identifier, a number field of the node identifier, a service type field, and a version number field.

Exemplarily, as shown in FIG. 4, the protocol header for indicating the first transmission path may also be referred to as a path header, and a structure of the path header may include following contents.
(1) Source port field (16 bits): used to describe information of a source port of the first transmission path.
(2) Destination port field (16 bits): used to describe information of a destination port of the first transmission path.
(3) Length field (8 bits): used to describe a length of the protocol header for indicating the first transmission path.
(4) Service type field (2 bits): used to describe information of a service type of a service corresponding to the first packet.
(5) Version number field (2 bits): used to describe information of a version number.
(6) Reserved bits (6 bits).
(7) Node ID length field (2 bits): used to describe a length of node IDs of nodes constituting the first transmission path.
(8) Node ID number field (4 bits): used to describe a length of a number of nodes constituting the first transmission path.
(9) Path information field: used to describe node IDs of nodes constituting the first transmission path. The length of the path information field is determined based on a product of the length of the node IDs of the nodes constituting the first transmission path and the number of node IDs.

In some embodiments, the length of the protocol header is greater than or equal to 7 bytes.

In some embodiments, as shown in FIG. 4, the second packet may further include an IP header, a UDP header, a real-time transport protocol (Real-time Transport Protocol, RTP)/real-time transport control protocol (Real-time Transport Control Protocol, RTCP) header, and a payload portion. If an IP protocol version number used is IPv4, the IP header is usually 20 bytes and if an IP protocol version number used is IPv6, the IP header is usually 40 bytes. The length of the UDP header is usually 8 bytes.

It should be understood that, a number of bits occupied by the fields shown in FIG. 4 is not fixed and may be adjusted according to actual needs.

In S103, the second packet is sent.

In some embodiments, the first node may send the second packet to a next node indicated by the first transmission path, so that the second packet may be transmitted to the second node (i.e., the destination node of the second packet) based on the first transmission path.

Exemplarily, the path management module of the first node may parse the IP address and the fixed port of the next node based on the second packet, and then forward the second packet to the next node through the data sending module.

In some embodiments, when the next node of the first node receives the second packet, the next node may also parse the IP address and the fixed port of the next node based on the second packet, and then forward the second packet to the next node through the data sending module. Furthermore, the second packet may be forwarded sequentially at each node constituting the first transmission path until the second packet is forwarded to the second node (i.e., the destination node).

In the embodiments of the present disclosure, the protocol header for indicating the first transmission path is provided in the embodiments of the present disclosure. Based on the protocol header, when service data is transmitted, the intermediate node may acquire the path information without decapsulating the entire packet. Thus, since there is no need to decapsulate the entire packet, it can be applicable to data transmission of more data types.

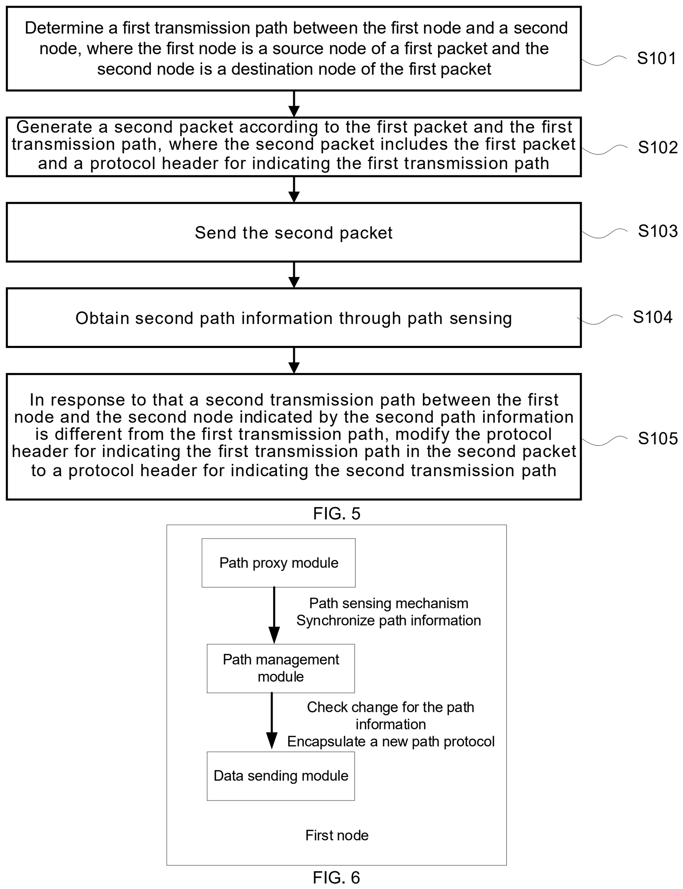

In some embodiments, as shown in FIG. 5, the data transmission method provided in the embodiments of the present disclosure may further include S104 to S105.

In S104, second path information through path sensing is obtained.

The second path information is used to indicate a path with the first node as the source node.

In some embodiments, based on the relevant description in S101 above, it can be known that the control node may calculate the optimal path between any nodes of the audio and video system in real time at a preset frequency. The calculated path information is then delivered synchronously to respective edge nodes. Furthermore, the path proxy module of the edge node may receive and store the acquired path information. In some embodiments, the path information may be stored in the form of a path table.

Thus, the first node may acquire the stored path information through the path sensing mechanism, and search the second path information with the source node being the second node in the stored path information. Exemplarily, the path management module of the first node may acquire the stored path information in the path proxy module.

In some embodiments, the path management module of the first node may also search the path proxy module for storage network topology information regularly. Therefore, the real-time and reliability of path information may be guaranteed through a message subscription mechanism and a timing mechanism.

In S105, in response to that a second transmission path between the first node and the second node indicated by the second path information is different from the first transmission path, the protocol header for indicating the first transmission path in the second packet is modified to a protocol header for indicating the second transmission path.

In some embodiments, in response to that a second transmission path between the first node and the second node indicated by the second path information is different from the first transmission path, the first node may update the second path information into the service packet header, based on an encapsulation manner of the above protocol header. Therefore, the path handover may be completed without user sensing, thereby improving user experience.

Exemplarily, as shown in FIG. 6, in response to that a second transmission path between the first node and the second node indicated by the second path information is different from the first transmission path, the path proxy module of the first node may notify the path management module in real time through a message subscription mechanism to change the path. Furthermore, the path management module of the first node may update the second path information into the service packet header.

In some embodiments, in response to that the second transmission path indicated by the second path information is different from the first transmission path, the first node may further update the path table. The path table that is updated records the path with the second node as the target node as the second transmission path.

Based on the above embodiments, the source node may detect whether the current path information is consistent with the path information that is updated through the path sensing mechanism, that is, whether the path handover is required to be performed. When the path handover is required to be performed, the second path information may be directly updated to the service packet header without link detection and querying to the control node, which reduces the complexity of the path handover process and further reduces the path handover time.

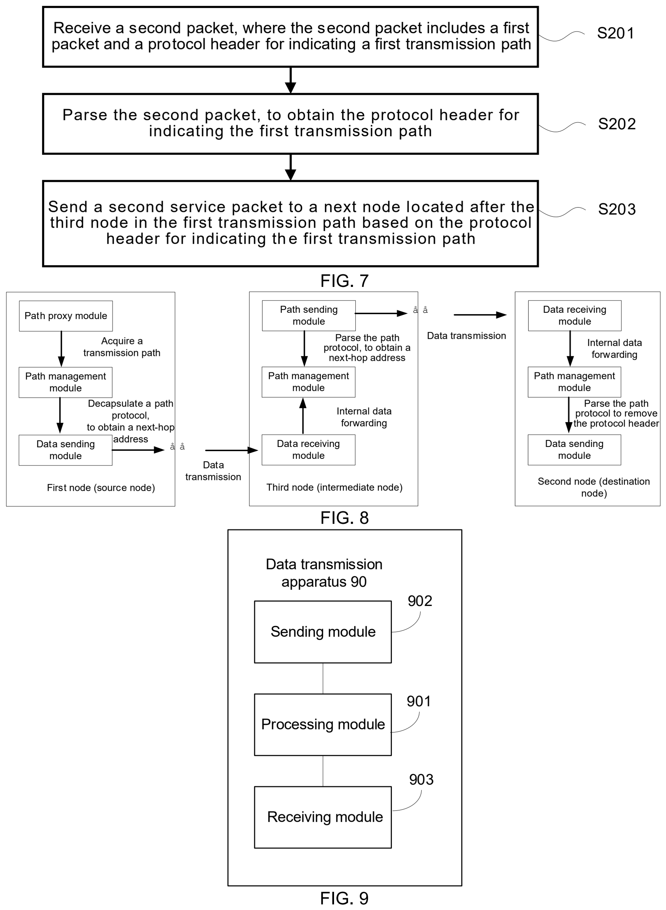

In some embodiments, as shown in FIG. 7, the embodiments of the present disclosure also provide another data transmission method, applied to a third node, the third node is a node after the first node in the first transmission path and exemplarily, the third node may be an edge node in the audio and video system as shown in FIG. 1. The method at least includes S201 to S203.

In S201, a second packet is received, where the second packet includes a first packet and a protocol header for indicating a first transmission path.

The first transmission path is a path between a first node and a second node, the first node is a source node of the first packet, and the second node is a destination node of the first packet.

In some embodiments, the protocol header for indicating the first transmission path is located in an outer layer of a header of the second packet.

It should be noted that, the protocol header for indicating the first transmission path is encapsulated at the outer layer of the packet header. Therefore, when transmitting the packet, an intermediate node does not need to decapsulate the entire packet (that is, the path information may be acquired at the outer layer of the packet header). Furthermore, the intermediate node does not need to consider adaptation problems of other data types (i.e., the data transmission of various data types may be supported).

In some embodiments, the protocol header for indicating the first transmission path includes a source port field, a destination port field, and a path information field, and the path information field is used to indicate a node included in the first transmission path.

In some embodiments, the protocol header for indicating the first transmission path further includes at least one of: a length field of the protocol header, a length field of a node identifier, a number field of the node identifier, a service type field, and a version number field.

Exemplarily, if the third node is a next node of the first node, as shown in FIG. 8, the path management module of the first node (i.e., the source node) may acquire the path information of the first transmission path at the path proxy module, and encapsulate the protocol header for indicating the first transmission path and the first packet, to obtain the second packet. Furthermore, the data sending module of the first node may transmit data to the third node. Correspondingly, the data receiving module of the third node may receive the second packet.

In S202, the second packet is parsed, to obtain the protocol header for indicating the first transmission path.

In some embodiments, the third node may decapsulate the packet to obtain the protocol header for indicating the first transmission path, and then may acquire ID information of a next-hop node based on the protocol header.

Exemplarily, as shown in FIG. 8, the data receiving module of the third node receives the second packet transmitted by the first node and forwards the second packet to the path management module. The path management module may decapsulate the packet and acquire the ID information of the next-hop node of the third node based on the above path protocol format and may convert the node ID into an IP address of the node and forward the IP address of the node to the data sending module.

In S203, a second service packet is sent to a next node located after the third node in the first transmission path based on the protocol header for indicating the first transmission path.

Exemplarily, as shown in FIG. 8, the data sending module of the third node may forward the packet to the next-hop node according to the IP address of the next-hop node and a fixed next hop port.

In some embodiments, if there are a plurality of intermediate nodes between the first node and the second node in the first transmission path, respective intermediate nodes all may first parse the protocol header to acquire the information of the next node based on the data transmission manners shown in S201 to S203, and then forward the information of the next node until the data is transmitted to a last intermediate node.

In some embodiments, the second node, after receiving the second packet, may parse the path protocol and if no next node is parsed, it may be determined that the second node is the destination node. The second node may remove the protocol header, to acquire original service data, that is, the above first packet.

Exemplarily, as shown in FIG. 8, the data receiving module of the second node may receive the second packet, and perform internal data forwarding, and forward the second packet, to the path management module. Then, the path management module of the second node parses the path protocol and removes the protocol header, to obtain the original service data, that is, the above first packet.

Based on the above embodiments, based on the protocol header for indicating the first transmission path provided in the embodiments of the present disclosure, when service data is transmitted, the intermediate node may acquire the path information without decapsulating the entire packet. Thus, since there is no need to decapsulate the entire packet, it can be applicable to data transmission of more data types.

The above introduces the solutions provided by the present disclosure mainly from the perspective of interaction between various nodes. It can be understood that, in order to implement the above functions, the various nodes (e.g., apparatuses or devices) contain corresponding hardware structures and/or software modules for performing various functions. Those skilled in the art should easily realize that the present disclosure can be implemented in the form of hardware or a combination of hardware and computer software, in combination with the algorithm steps of various examples described in the embodiments disclosed herein. Whether a certain function is executed by hardware or by computer software driving hardware, depends on the specific applications and design constraint conditions of the technical solutions. Professional technicians may use different methods to implement the described functions, for each specific application, but this implementation should not be considered beyond the scope of the present disclosure.

FIG. 9 is a schematic diagram of components of a data transmission apparatus according to some embodiments, and the data transmission apparatus is applied to a first node. As shown in FIG. 9, the data transmission apparatus 90 includes a processing module 901 and a sending module 902. In some embodiments, the data transmission apparatus 90 may further include a receiving module 903.

In some embodiments, the processing module 901 is configured to determine a first transmission path between a first node and a second node, where the first node is a source node of a first packet and the second node is a destination node of the first packet. The processing module 901 is further configured to generate a second packet according to the first packet and the first transmission path, where the second packet includes the first packet and a protocol header for indicating the first transmission path. The sending module 902 is used to send the second packet.

In some embodiments, the protocol header for indicating the first transmission path is located at an outer layer of a header of the second packet.

In some embodiments, the protocol header for indicating the first transmission path includes a source port field, a destination port field, and a path information field, and the path information field is used to indicate a node comprised in the first transmission path.

In some embodiments, the protocol header for indicating the first transmission path further includes at least one of: a length field of the protocol header, a length field of a node identifier, a number field of the node identifier, a service type field, and a version number field.

In some embodiments, the processing module 901 is further configured to perform searching based on a pre-stored path table, to determine the first transmission path, where the path table is used to record a path with the first node as a source node in an audio and video system.

In some embodiments, the receiving module 903 is configured to receive first path information sent from a control node, where the first path information is used to indicate a path with the first node as a source node, determined by the control node based on collected edge node data. The processing module 901 is configured to generate the path table according to the first path information.

In some embodiments, the processing module 901 is configured to obtain second path information through path sensing; where the second path information is used to indicate a path with the first node as a source node. In a case where a second transmission path between the first node and the second node indicated by the second path information is different from the first transmission path, the protocol header for indicating the first transmission path in the second packet is modified to a protocol header for indicating the second transmission path.

In some embodiments, the processing module 901 is configured to update the path table, in a case where the second transmission path indicated by the second path information is different from the first transmission path; where the path table that is updated records a path with the second node as a target node, as the second transmission path.

It should be noted that, the modules in FIG. 9 may also be referred to as units. For example, the sending module may be referred to as a sending unit. In addition, in the embodiments shown in FIG. 9, the names of the respective modules may not be the names shown in the figure, and for example, the sending module may also be referred to as a communication module.

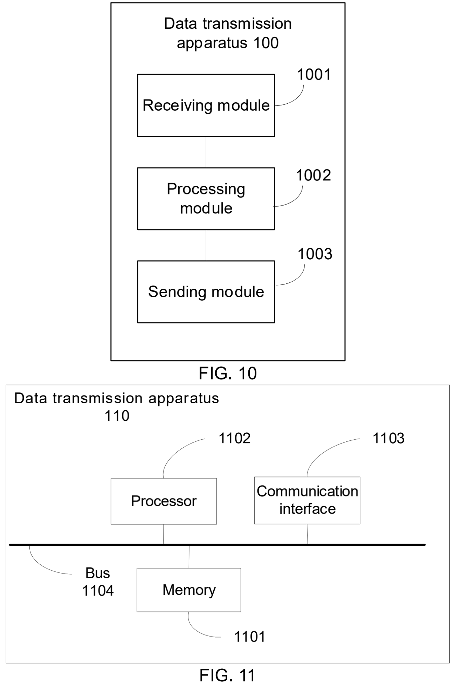

FIG. 10 is a schematic diagram of components of another data transmission apparatus according to some embodiments, and the data transmission apparatus is applied to a third node. As shown in FIG. 10, the data transmission apparatus 100 includes a receiving module 1001, a processing module 1002 and a sending module 1003.

In some embodiments, the receiving module 1001 is configured to receive a second packet, where the second packet includes a first packet and a protocol header for indicating a first transmission path, the first transmission path is a path between a first node and a second node, the first node is a source node of the first packet, and the second node is a destination node of the first packet. The processing module 1002 is configured to parse the second packet, to obtain the protocol header for indicating the first transmission path. The sending module 1003 is configured to send a second service packet to a next node located after the third node in the first transmission path based on the protocol header for indicating the first transmission path.

In some embodiments, the protocol header for indicating the first transmission path is located at an outer layer of a header of the second packet.

In some embodiments, the protocol header for indicating the first transmission path includes a source port field, a destination port field, and a path information field, and the path information field is used to indicate a node comprised in the first transmission path.

In some embodiments, the protocol header for indicating the first transmission path further includes at least one of: a length field of the protocol header, a length field of a node identifier, a number field of the node identifier, a service type field, and a version number field.

If each unit in FIG. 9 or FIG. 10 is implemented in the form of a software functional module, and sold or used as a separate product, the unit may be stored in a computer readable storage medium. Based on this understanding, the technical solutions of the embodiments of the present disclosure may be essentially, or a part of the technical solutions that contributes to the existing technology, or a part of all of the technical solutions, may be embodied in the form of a software product, and the computer software product is stored in a storage medium, and includes a plurality of instructions to cause a computer device (which may be a personal computer, a server, a network device, etc.) or processor to perform a part or all of the steps of the methods of various embodiments of the present disclosure. The storage medium storing the computer software product includes various types of medium capable of storing program codes, such as a U disk (USB flash disk), a mobile hard disk, a read-only memory (ROM), a random access memory (RAM), a magnetic disk, or an optical disk, etc.

In a case where the functions of the above integrated modules are implemented in the form of hardware, the embodiments of the present disclosure provide a structural schematic diagram of a data transmission apparatus, the data transmission apparatus may be the above-mentioned data transmission apparatus 90 or data transmission apparatus 100. As shown in FIG. 11, the data transmission apparatus 110 includes a processor 1102, a communication interface 1103, and a bus 1104. In some embodiments, the data transmission apparatus 110 may further include a memory 1101.

The processor 1102 may implement or perform various exemplary logical blocks, modules and circuits described in conjunction with the content disclosed in the present disclosure. The processor 1102 may be a central processing unit, a general-purpose processor, a digital signal processor, an application specific integrated circuit, a field programmable gate array or any other programmable logic device, a transistor logic device, a hardware component, or any combination thereof. The processor 1102 may implement or perform various exemplary logical blocks, modules and circuits described in conjunction with the content disclosed in the present disclosure. The processor 1102 may also be a combination that implements computing functions, for example, including a combination of one or more microprocessors, a combination of a digital signal processor (DSP) and a microprocessor, or the like.

The communication interface 1103 is configured to connect with other devices via a communication network. The communication network may be an Ethernet, a radio access network, a wireless local area network (WLAN), or the like.

The memory 1101 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 1101 may exist independently of the processor 1102, and the memory 1101 may be connected to the processor 1102 via the bus 1104 and is used for storing instructions or program codes. The processor 1102, when calling and executing the instructions or program codes stored in the memory 1101, is capable of implementing the information processing mode determining method provided in the embodiments of the present disclosure.

As another implementation, the memory 1101 may be integrated with the processor 1102.

The bus 1104 may be an extended industry standard architecture (EISA) bus or the like. Buses 1104 may be divided into address buses, data buses, control buses, and the like. For the convenience of representation, only one thick line is used in FIG. 11 for representation, but it does not mean that there is only one bus or one type of bus.

From the description of the above embodiments, those skilled in the art can clearly understand that, for convenience and brevity of description, an illustration is only given by the division of functional modules mentioned above. In practical applications, the functions mentioned above may be allocated to be completed by different functional modules according to requirements. That is, the internal structure of the device or apparatus is divided into different functional modules to complete all or a part of the functions mentioned above.

The embodiments of the present disclosure further provide a computer readable storage medium. All or a part of the procedures in the method embodiments mentioned above may be completed by related hardware indicated by computer instructions, and the program may be stored in the computer readable storage medium mentioned above. The program, when executed, may include the procedures of the method embodiments mentioned above. The computer readable storage medium may be or a memory of any one of the aforementioned embodiments. The computer readable storage medium mentioned above may also be an external storage device of the device or apparatus mentioned above, e.g., a plug-in hard disk, a smart memory card (smart media card, SMC), a secure digital (SD) card, a flash card, etc., equipped on the device or apparatus mentioned above. Furthermore, the computer readable storage medium mentioned above may further include both an internal storage unit and an external storage device of the device or apparatus mentioned above. The computer readable storage medium mentioned above is used to store the computer program mentioned above, and other programs and data required for the device or apparatus mentioned above. The above-mentioned computer readable storage medium may also be used to temporarily store data that has been output or is to be output. The readable storage medium includes a non-transitory computer readable storage medium.

The embodiments of the present disclosure further provide a computer program product, the computer product contains a computer program, the computer program product, when executed on a computer, causes the computer to perform any information processing mode determining method provided in the above embodiments.

Although the present disclosure is described herein in conjunction with respective embodiments, other variations of the disclosed embodiments may be understood and implemented by those skilled in the art by viewing the drawings, the disclosed content, and the attached claims, in the process of implementing the claimed processes of the present disclosure. In the claims, the word "comprise/comprises/comprising" does not exclude other components or steps, and "a/an" or "one" does not exclude multiple cases. A single processor or other unit may implement functions of several items listed in the claims. A fact that some measures are documented in dependent claims different from each other does not mean that these measures cannot be combined to exert a good effect.

Although the present disclosure is described in conjunction with detailed features and embodiments thereof, it is apparent that various modifications and combinations may be made thereto without departing from the spirit and scope of the present disclosure. Accordingly, the specification and drawings are merely exemplary explanation of the present disclosure as defined by the attached claims and are deemed to cover any and all modifications, variations, combinations or equivalents within the scope of the present disclosure. Obviously, those skilled in the art may make various changes and variations to the present disclosure without departing from the spirit and scope of the present disclosure. In this way, if these modifications and variants of the present disclosure fall within the scope of the claims of the present disclosure and their equivalent technologies, the present disclosure is also intended to contain these modifications and variants.

The above descriptions are only specific implementations of the present disclosure, but the protection scope of the present disclosure is not limited thereto, any changes or replacements within the technical scope disclosed in the present disclosure shall be included in the protection scope of the present disclosure. Therefore, the protection scope of the present disclosure shall be determined based on the protection scope of the claims.

## Claims

1. A data transmission method, **characterized in that** the method is applied to a first node, and comprises:
determining a first transmission path between the first node and a second node, wherein the first node is a source node of a first packet and the second node is a destination node of the first packet;
generating a second packet according to the first packet and the first transmission path, wherein the second packet comprises the first packet and a protocol header for indicating the first transmission path; and
sending the second packet.

2. The method according to claim 1, wherein the protocol header for indicating the first transmission path is located at an outer layer of a header of the second packet.

3. The method according to claim 1, wherein the protocol header for indicating the first transmission path comprises a source port field, a destination port field, and a path information field, and the path information field is used to indicate a node comprised in the first transmission path.

4. The method according to claim 3, wherein the protocol header for indicating the first transmission path further comprises at least one of: a length field of the protocol header, a length field of a node identifier, a number field of a node identifier, a service type field, and a version number field.

5. The method according to claim 1, wherein determining the first transmission path between the first node and the second node comprises:
performing searching based on a pre-stored path table, to determine the first transmission path, wherein the path table is used to record a path with the first node as a source node in an audio and video system.

6. The method according to claim 5, wherein before perform searching based on the pre-stored path table, the method further comprises:
receiving first path information sent from a control node, wherein the first path information is used to indicate a path with the first node as a source node, determined by the control node based on collected edge node data; and
generating the path table according to the first path information.

7. The method according to claim 1, further comprising:
obtaining second path information through path sensing; wherein the second path information is used to indicate a path with the first node as a source node; and
in response to that a second transmission path between the first node and the second node indicated by the second path information is different from the first transmission path, modifying the protocol header for indicating the first transmission path in the second packet to a protocol header for indicating the second transmission path.

8. The method according to claim 7, further comprising:
in response to that the second transmission path indicated by the second path information is different from the first transmission path, updating the path table; wherein the path table that is updated records a path with the second node as a target node, as the second transmission path.

9. A data transmission method, wherein the method is applied to a third node, and comprises:
receiving a second packet, wherein the second packet comprises a first packet and a protocol header for indicating a first transmission path, the first transmission path is a path between a first node and a second node, the first node is a source node of the first packet, and the second node is a destination node of the first packet;
parsing the second packet, to obtain the protocol header for indicating the first transmission path; and
sending a second service packet to a next node located after the third node in the first transmission path based on the protocol header for indicating the first transmission path.

10. The method according to claim 9, wherein the protocol header for indicating the first transmission path is located at an outer layer of a header of the second packet.

11. The method according to claim 9, wherein the protocol header for indicating the first transmission path comprises a source port field, a destination port field, and a path information field, and the path information field is used to indicate a node comprised in the first transmission path.

12. The method according to claim 10, wherein the protocol header for indicating the first transmission path further comprises at least one of: a length field of the protocol header, a length field of a node identifier, a number field of a node identifier, a service type field, and a version number field.

13. A communication apparatus, **characterized by** comprising: a memory and a processor; wherein the memory is coupled with the processor; the memory is configured to store instructions executable by the processor; and the processor, when executing the instructions, performs the method according to any one of claims 1 to 12.

14. A computer readable storage medium, **characterized in that** the computer readable storage medium has stored computer instructions thereon, and the computer instructions, when executed on a communication apparatus, cause the communication apparatus to perform the method according to any one of claims 1 to 12.
